# EUROPEAN PATENT SPECIFICATION

(11) **EP 2 141 191 B1**
(45) Date of publication and mention of the grant of the patent: **15.01.2014**
(21) Application number: 08159463.2
(22) Date of filing: 01.07.2008
(51) Int. Cl.: B29C 47/00, B32B 23/04, B32B 23/08, B65D 65/46, B29C 47/02, B32B 27/36, C08J 7/04

(54) **Composite Package**
Verbundstoffpackung
Emballage composite

(43) Date of publication of application: 06.01.2010
(73) Proprietor: Amcor Flexibles Transpac N.V., 1935 Zaventem (BE)
(72) Inventor: Ettridge, Peter, Worcester Worcestershire WR3 8DA (GB); White, Christopher R, Bishopsworth Bristol BS13 7RZ (GB)
(74) Representative: Latham, Stuart Alexander

(56) References cited:
- EP-A- 0 534 471
- WO-A-97/11845
- WO-A-97/37848
- WO-A-99/01278
- WO-A-99/04948
- WO-A-02/059199
- WO-A-2005/003209
- WO-A-2006/031568
- WO-A-2007/092394
- DE-A1- 10 104 829

## Description

### Technical Field

This invention relates to a biodegradable, compostable composite package suitable for food products, especially wet food products such as cut and prepared fruit, salad or vegetables, hereinafter referred to as "fresh produce".

Regenerated cellulose films such as "NatureFlex" made by Innovia Films are biodegradable and compostable. "NatureFlex" is a trade mark of Innovia Films. These films may be coated or uncoated and when coated may be heat-sealable. Typically such films have excellent gas barrier properties and stiffness when dry. However, they are generally less suitable for packing fresh produce, stored in chilled conditions. Where fresh produce is packaged in a fully sealed pack made from "NatureFlex" coated cellulose film, the film becomes soft and the seals become weak and can open with little force. For example the seal strength of a typical "NatureFlex" coated cellulose film when dry is 300g/25mm but this reduces to <50g/25mm when packaging fresh produce stored in chilled conditions. This compromises the commercial appearance and integrity of the pack making it impractical as a packaging material for fresh produce.

The gas barrier properties of these cellulose films are also significantly compromised when they are exposed to elevated moisture conditions.

Accordingly, cellulose films are sometimes combined as a laminate with other polymeric films such as polyethylene or polypropylene which have good resistance and barrier to moisture, the polyethylene or polypropylene film adjacent to the packed product. In this way the polyethylene or polypropylene film protects the cellulose film from the effect of the moisture in the product and preserves the excellent gas barrier and stiffness of the cellulose film component of the structure. However, polyethylene and polypropylene are neither biodegradable nor compostable and therefore the overall structure is not biodegradable or compostable.

Addition of starch or other chemical additives to polyethylene and polypropylene can render these films biodegradable without seriously compromising their effectiveness as a moisture barrier but such additives do not enable these films to be classified as compostable in accordance with the definition of compostability in such international standards as EN 13432 or ASTM 6400.

In contrast, the physical properties of certain biodegradable, compostable co-polyesters manufactured by BASF, Novamont, Mitsubishi and others are less affected by short term exposure to water and when sealed to themselves give good seal strength and seal integrity. However, these materials are intrinsically soft and extensible and do not have the necessary stiffness to form an effective package on typical modem high speed pack forming and filling machinery. In addition they have moderate to poor gas and water permeability properties rendering them unsuitable for packaging fresh produce.

WO 2006/01568 describes a biodegradable laminate suitable for use in shaped paper-based articles such as containers for food products, comprising a paper-based substrate having first and second copolyester layers deposited onto at least one surface of the substrate, in the substantial absence of intervening polymer layers between the substrate surface and the copolyesters deposited on the substrate surface. A biodegradable shaped article formed from the laminate and a method for forming a biodegradable laminate are also disclosed.

DE10104829 describes a multiplayer polymer films comprising at least two layers.

WO02/059199 describes a mixture of biodegradable polyesters which includes an aromatic-aliphatic polyester, an aliphatic polyester and a polylactic acid polymer.

### Disclosure of the Invention

According to a first aspect the invention consists in controlled gas atmosphere packaging according to claim 1.

According to a second aspect the invention consists in controlled gas atmosphere packaging according to claim 4.

According to a third aspect, the invention consists in a method according to claim 12.

### Modes of Currying out the Invention

According to a first embodiment, a layer of a bio-degradable, compostable co-polyester is extrusion coated onto the surface of a bio-degradable compostable cellulose film to overcome the limitations of cellulose film as a packaging film for fresh produce and still retain the biodegradability, compostability and stiffness of the overall structure. This is achieved despite the relatively poor resistance of these co-polyester materials to water vapour transmission which might be expected to result in unacceptably reducing the gas barrier performance and stiffness of the cellulose film.

Anyone skilled in the art would not recognise paper or cellulose film as the ideal component layer in a packaging structure for moist products because of the inherent instability of these materials when exposed to a wet environment, and would not consider a degradable compostable co-polyester polymer an effective barrier to moisture vapour. The combination of the two would not therefore commend itself as suitable for packaging fresh produce.

However, although the co-polyester inner sealing layer of the pack does not provide a barrier to moisture vapour transmission it has been shown that by choosing the type of co-polyester polymer and the thickness of the extruded polymer film it is possible to control the rate of transmission of moisture vapour such that the outer cellulose film retains sufficient stiffness to preserve the appearance, dimensional stability and marketability of the package without loss of seal strength. The extrusion coating of co-polyester polymer may be in the range 8 to 50 micron average thickness and preferably 15 to 40 micron average thickness.

Indeed it has been found that when a compostable co-polyester of this thickness is extrusion coated onto a coated "NatureFlex" regenerated cellulose film, the water resistance, pack integrity and pack stiffness are retained far beyond levels that would be reasonably predicted as demonstrated by the following test results.

Pillow bags were manufactured using three different materials: 1) Commercial "MATER-BI" blown film coextrusion 35µm thick; 2) "NatureFlex" NVS extrusion coated with 30 µm thickness Mitsubishi AZ91T; and 3) "NatureFlex" NVS 30 µm thick. "MATER-BI" is the registered trade mark of Novamont and comprises a biodegradable, compostable co-polyester sold by Novamont. Mitsubishi AZ91T is also biodegradable, compostable co-polyester sold by Mitsubishi Chemical and is comparable to "MATER-BI".

Wet produce was packed in pillow bags of the above materials and stored for 24 hours in a laboratory refrigerator at 5°C and 40% Relative Humidity (RH). The packs were unperforated so 100% RH inside the packs was assumed. Similar packs were made and stored for the same test period without any product in ambient conditions (30-50% RH, 20 - 24 °C)

After 24 hours conditioning in their respective environments, machine direction 1% secant modulus (MPa) and heatseal strengths (g/25mm) were measured.

Secant Modulus is an established measure of stiffness for packaging materials. Heat seal strength indicates the resistance of a sealed pack to intentional or accidental opening. Accidental opening during storage or transport will compromise pack integrity and render the product unsuitable for sale.

The results were as follows:

| | Seal Strength Dry (g/25mm) | Seal Strength Wet (g/25mm) | 1% Secant Modulus (Mpa) Ambient | 1% Secant Modulus (Mpa) Wet | % reduction in seal strength | % reduction in 1% Secant Modulus |
|---|---|---|---|---|---|---|
| 35 µm Commercial "MATER-BI" blown film coextrusion | 1292 | 986 | 257 | 183 | 24% | 29% |
| 23 µm "NatureFlex" NVS Extrusion Coated with 30 µm Mitsubishi AZ91T | 2475 | 2626 | 1012 | 542 | -6% | 46% |
| 30 µm "NatureFlex" NVS | 115 | 47 | 2014 | 410 | 59% | 80% |

It was found that 'wet' packed produce conditioning caused the seal strength of "NatureFlex" NVS to fall to a level where pack integrity could be compromised.
In addition, 'wet' packed produce conditioning caused the 1% secant modulus of "NatureFlex" NVS to fall by 80%, making the material feel soft and extensible.

The combination of loss in modulus and low seal strength rendered "NatureFlex" NVS unsuitable for 'wet' packed produce applications.

Seal strength and secant modulus of commercial "MATER-BI" film reduced by 24 and 29% respectively. The reduction in seal strength was not enough to cause pack integrity issues but the film is known to be too soft and extensible for packing of retail prepared fresh produce.

In contrast, Seal strength of extrusion coated "NatureFlex" increased slightly upon exposure to wet environment, indicating excellent retention of pack integrity in a wet packed produce environment. Secant modulus of the extrusion coated "NatureFlex" reduced, but the net secant modulus was still in excess of that given by commercial "MATER-BI" and "NatureFlex" NVS.

Using the well established principle of the 'rule of mixtures', one could predict that the secant modulus of the extrusion coated "NatureFlex" stored in a wet environment should have reduced to around 240 MPa. However, the secant modulus only reduced to 542 MPa.

This combination of stiffness and seal strength retention provides a product that is ideally suited to packing prepared fresh produce and other chilled products.

Additionally, it has been found that good bond strength between the cellulose film and the extruded co-polyester polymer can be achieved by applying a thin coating of co-polyester to the surface of the cellulose film by means of a solvent or water based coating process. The co-polyester polymer may comprise packaging in which both surfaces of the cellulose film are pre-coated. Where both surfaces are pre-coated the co-polyester pre-coating provides good adhesion to the extruded co-polyester polymer on one surface and on the opposite surface the coating will heat-seal not only to itself but also to the extruded co-polyester polymer allowing the formation of conventional packaging bags having "fin" end seals and a "lap" back seal. Because of their chemical composition such solvent or water based coatings are themselves compostable so the compostability of the overall structure is undiminished.

The following table of test results illustrates the improvement in bond strength achieved between cellulose film and an extruded co-polyester polymer when a thin solvent or water based coating of co-polyester is applied to the cellulose film prior to extrusion coating. In this example, 22 micron "NatureFlex" DNE one-side coated cellulose film has been extrusion coated with 40 micron "MATER-BI" 1669 co-polyester polymer on its pre-coated, and, in a separate test, on its uncoated surface. The test results show a significant increase in the bond strength of the co-polyester extrusion coating when the extruded polymer is applied to the pre-coated film surface as opposed to the uncoated surface of the cellulose film. The results also show a significant increase in the heat seal strength of the composite film when the co-polyester extrusion coated surface of the film is heat-sealed to itself.

| | Bond Strength (g/25mm) | Seal Strength (g/25mm) | Comments |
|---|---|---|---|
| "MATER-BI" co-polyester polymer extrusion coated onto uncoated "NatureFlex" DNE surface | 26 | 1,025 | Little/no bond to uncoated "NatureFlex" |
| "MATER-BI" co-polyester polymer extrusion coated onto pre-coated "NatureFlex" DNE surface | 641 | 8,540 | Excellent adhesion to pre-coated "NatureFlex" |

Furthermore, in packaging many items of fresh produce it is necessary to modify the gas permeability of the package to provide extended shelf-life. This is usually done by using a laser process to make a controlled number of micro-perforations of pre-determined size in the film so that the overall gas permeability of the micro-perforated package matches the respiration characteristics of the packed product. However, when micro-perforations are applied to a cellulose film it is impossible to control the gas permeability of the package because the micro-perforations reduce in size (i.e. diameter) as the film absorbs water from the wet respiring produce.

It has been found that when the cellulose film is extrusion coated with a suitable co-polyester polymer according to the invention, swelling can be avoided or is sufficiently reduced to avoid any significant change in the diameter of the micro-perforations formed in the film, thereby making it suitable for modified or controlled gas atmosphere packaging to extend the shelf life of fresh produce.

Additionally, the inherent gas barrier of cellulose film is affected by the moisture content of the film. This makes it difficult to control the gas permeability of the package when using a cellulose film to pack moist products. As mentioned above, an extrusion coated inner layer of co-polyester although it is not itself a barrier to moisture, nevertheless reduces the uptake of moisture from the packed product by the cellulose film and so allows the cellulose film to better retain its inherent gas barrier properties.

Tests have demonstrated that the micro-perforations in a coated "NatureFlex" cellulose film used to pack fresh produce are significantly constricted. In one set of trials, micro-perforations having an original hole diameter of 90 micron closed entirely when the film was used to pack a fresh produce.

The extent of the reduction in hole size can also be influenced by the relative humidity of the atmosphere outside the pack. If the outside pack atmosphere is dry the cellulose film will give up some of its retained moisture to the atmosphere and the hole size constriction is more limited.

The same fresh produce packed in a composite film comprising a coated "NatureFlex" cellulose film having a 30 micron co-polyester extrusion coating applied to the inside pack surface showed only a small (5%) reduction in hole diameter.

Smaller perforations exhibit a disproportionately greater change in hole diameter and area than larger perforations. Such changes in hole diameter have a impact on the gas transmission rate through the micro-perforated film. This has implications for the use of micro-perforated cellulose film in modified atmosphere packaging of fresh produce since variability in the gas transmission rate of the film affects the ability of the film to preserve the packed product in good condition.

For modified atmosphere packaging of fresh produce the average diameter of micro-perforations is less than 200 micrometer and preferably less than 150 micrometer.

For some packaging applications very high gas (and moisture) barrier is required. The barrier requirement may be even higher than that provided by a dry cellulose film. For packaging dry products, a possible solution is to apply an additional barrier layer to the cellulose film. Such layers include solvent and water based coatings based on poly vinyl alcohol polymer or ethylene vinyl alcohol copolymers and thin deposition coatings of aluminium, aluminium oxide and silica oxide which may be applied by a vacuum coating process. However for packaging moist products this is not a solution because the cellulose film picks up moisture from the product which increases the moisture content of the film. This reduces the effectiveness of the cellulose film as a barrier layer and causes the film to swell resulting in damage through disruption and cracking in the case of a metal or oxide barrier layer together with loss of seal strength and integrity.

According to another embodiment a biodegradable, compostable co-polyester polymer is extrusion coated onto an additional barrier layer to provide a significant barrier enhancement in high humidity environments beyond levels that would be reasonably predicted. In addition to reducing moisture ingress into the cellulose film layer and by avoiding swelling of the cellulose film, it is believed the extrusion coated layer further enhances the effectiveness of the additional barrier layer by blocking any defects in the layer which may contribute to gas transmission and provides the layer with an especially smooth surface to reduce the actual number of defects.

Furthermore adhesion between the extruded co-polyester polymer coating and an aluminium surface of an additional barrier layer is good and requires no additional coating or adhesive which potentially could affect compostability.

The following test results show that by extrusion coating a biodegradable, compostable co-polyester polymer onto the metal surface of a metallised coated "NatureFlex" cellulose film, it is possible to provide a significant barrier enhancement in high humidity environments beyond levels that would be reasonably predicted.

The film structure for the test was as follows (reading from the outside of the package to the inside of the package):

| |
|---|
| Solvent or water based co-polyester coating |
| Regenerated cellulose film |
| Solvent or water based co-polyester coating |
| Thin vacuum deposition of aluminium |
| Extruded co-polyester coating |

For this test a 23 micron "NatureFlex" NM one-side aluminium metallised coated cellulose film was used and a 30 micron layer of Mitsubishi AZ91T co-polyester polymer was extrusion coated onto the metallised surface. Oxygen Transmission Rate OTR and Moisture Vapour Transmission Rate MVTR were measured for various samples.

Improvement in oxygen and moisture barrier performance of this structure were obtained and compared with the same film without the co-polyester coating as shown in the following table.

| | Bond Strength (g/25mm) | OTR (dry) | OTR (75% rh) | MVTR (38C, 90%rh) | Comments |
|---|---|---|---|---|---|
| "NatureFlex" NM one-side metallised coated cellulose film | N/A | <3 | 10 | <10 | |
| "NatureFlex" NM one-side metallised coated cellulose film with 30 micron co-polyester extrusion coating applied to metal surface | 600 | <1 | 2.2 | 2.5 | Excellent adhesion between co-polyester extrusion coating and metal surface |

## Claims

1. Controlled gas atmosphere packaging to extend the shelf life of fresh produce, comprising a multi-layer structure including a biodegradable compostable regenerated cellulose film and an extrusion coating of biodegradable compostable co-polyester polymer on the inside of the packaging relative to the cellulose film, wherein the packaging has micro-perforations, each with an average diameter of less than 200 micrometers.

2. Packaging as claimed in claim 1 in which the inside surface of the regenerated cellulose film is pre-coated with a solvent or water based coating of co-polyester before it is coated with the co-polyester polymer extrusion.

3. Packaging as claimed in claim 2 in which both surfaces of the regenerated cellulose film are pre-coated.

4. Controlled gas atmosphere packaging to extend the shelf life of fresh produce, comprising a multi-layer structure including a biodegradable compostable regenerated cellulose film, an additional gas or water vapour barrier layer applied to the cellulose film, and an extrusion coating of biodegradable compostable co-polyester polymer on the additional barrier layer on the inside of the packaging relative to the cellulose film, wherein the packaging has micro-perforations, each with a diameter of less than 200 micrometers.

5. Packaging as claimed in claim 4 in which the inside surface of the regenerated cellulose film is pre-coated with a solvent or water based coating of co-polyester before it is coated with the additional barrier layer.

6. Packaging as claimed in claim 5 in which both surfaces of the regenerated cellulose film are pre-coated

7. Packaging as claimed in any of the preceding claims in which the extruded co-polyester coating has an average thickness greater than 8 and less than 50 micrometers.

8. Packaging as claimed in any of the preceding claims in which the extruded co-polyester coating has an average thickness greater than 15 and less than 40 micrometers.

9. Packaging as claimed in any of the preceding claims in which the extruded co-polyester polymer comprises an aliphatic - aromatic co-polyester based on terephthalic acid, adipic acid and 1,4 butane diol, or a polybutylene succinate polymer.

10. Packaging as claimed in claim 9 in which the extruded co-polyester polymer comprises a said aliphatic - aromatic co-polyester and wherein the aliphatic - aromatic co-polyester is blended with starch.

11. Packaging as claimed in any of claims 1 to 8 in which the extruded co-polyester polymer comprises a polybutylene succinate polymer and wherein the polybutylene succinate polymer is blended with polylactic acid or starch.

12. A method of manufacturing controlled gas atmosphere packaging to extend the shelf life of fresh produce in which a biodegradable compostable regenerated cellulose film is pre-coated with a solvent or water based coating of biodegradable compostable co-polyester polymer and a coating of co-polyester polymer is extrusion coated onto the pre-coated surface of the regenerated cellulose film, wherein micro-perforations are formed in the packaging, each with an average diameter of less than 200 micrometers.

## Patentansprüche

1. Kontrollierte-Gasatmosphäre-Verpackung zum Verlängern der Lagerbeständigkeit von Frischwaren, aufweisend eine Mehrschichtstruktur, die eine biologisch abbaubare kompostierbare regenerierte-Zellulose-Folie und eine Extrusionsschicht aus biologisch abbaubarem kompostierbarem Co-Polyesterpolymer an der Innenseite der Verpackung bezüglich der Zellulosefolie aufweist, wobei die Verpackung Mikroperforierungen jeweils mit einem durchschnittlichen Durchmesser von weniger als 200 µm aufweist.

2. Verpackung gemäß Anspruch 1, wobei die Innenfläche der regenerierte-Zellulose-Folie mit einer lösungsmittel- oder wasserbasierten Co-Polyesterschicht vorbeschichtet wird, bevor sie mit der Co-Polyesterpolymerextrusion beschichtet wird.

3. Verpackung gemäß Anspruch 2, wobei beide Flächen der regenerierte-Zellulose-Folie vorbeschichtet sind.

4. Kontrollierte-Gasatmosphäre-Verpackung zum Verlängern der Lagerbeständigkeit von Frischwaren, aufweisend eine Mehrschichtstruktur, die eine biologisch abbaubare kompostierbare regenerierte-Zellulose-Folie, eine auf die Zellulose-Folie aufgebrachte zusätzliche Gas- oder Wasserdampf-Barriereschicht und eine Extrusionsschicht aus biologisch abbaubarem kompostierbarem Co-Polyesterpolymer an der zusätzlichen Barriereschicht an der Innenseite der Verpackung bezüglich der regenerierte-Zellulose-Folie aufweist, wobei die Verpackung Mikroperforierungen jeweils mit einem Durchmesser von weniger als 200 µm aufweist.

5. Verpackung gemäß Anspruch 4, wobei die Innenfläche der regenerierte-Zellulose-Folie mit einer lösungsmittel- oder wasserbasierten Co-Polyesterschicht vorbeschichtet wird, bevor sie mit der zusätzlichen Barriereschicht beschichtet wird.

6. Verpackung gemäß Anspruch 5, wobei beide Flächen der regenerierte-Zellulose-Folie vorbeschichtet sind.

7. Verpackung gemäß irgendeinem der vorhergehenden Ansprüche, wobei die extrudierte Co-Polyesterschicht eine durchschnittliche Dicke von größer als 8 µm und kleiner als 50 µm hat.

8. Verpackung gemäß irgendeinem der vorhergehenden Ansprüche, wobei die extrudierte Co-Polyesterschicht eine durchschnittliche Dicke von größer als 15 µm und kleiner als 40 µm hat.

9. Verpackung gemäß irgendeinem der vorhergehenden Ansprüche, wobei das extrudierte Co-Polyesterpolymer einen auf Terephthalsäure, Adipinsäure und 1,4-Butandiol basierenden aliphatisch-aromatischen Co-Polyester oder ein Polybutylensuccinatpolymer aufweist.

10. Verpackung gemäß Anspruch 9, wobei das extrudierte Co-Polyesterpolymer den aliphatisch-aromatischen Co-Polyester aufweist und wobei der aliphatisch-aromatische Co-Polyester mit Stärke vermischt ist.

11. Verpackung gemäß irgendeinem der Ansprüche 1 bis 8, wobei das extrudierte Co-Polyesterpolymer ein Polybutylensuccinatpolymer aufweist und wobei das Polybutylensuccinatpolymer mit Polymilchsäure oder Stärke vermischt ist.

12. Ein Verfahren zum Herstellen einer kontrollierte-Gasatmosphäre-Verpackung zum Verlängern der Lagerbeständigkeit von Frischwaren, wobei eine biologisch abbaubare kompostierbare regenerierte-Zellulose-Folie mit einer lösungsmittel- oder wasserbasierten Schicht aus biologisch abbaubarem kompostierbarem Co-Polyesterpolymer vorbeschichtet wird und eine Co-Polyesterpolymerschicht auf die vorbeschichtete Fläche der regenerierte-Zellulose-Folie extrusionsbeschichtet wird, wobei Mikroperforierungen jeweils mit einem durchschnittlichen Durchmesser von weniger als 200 µm in der Verpackung ausgebildet werden.

## Revendications

1. Emballage à atmosphère gazeuse contrôlée pour allonger la durée de conservation d'un produit frais, comprenant une structure multicouche contenant un film de cellulose régénérée compostable biodégradable et un revêtement par extrusion de co-polyester polymère compostable biodégradable sur le côté intérieur de l'emballage par rapport au film de cellulose, étant précisé que l'emballage a des microperforations qui présentent chacune un diamètre moyen de moins de 200 micromètres.

2. Emballage tel qu'il est revendiqué dans la revendication 1, dans lequel la surface intérieure du film de cellulose régénérée est prérevêtue d'un revêtement de co-polyester à base de solvant ou d'eau avant d'être revêtue par extrusion du co-polyester polymère.

3. Emballage tel qu'il est revendiqué dans la revendication 2, dans lequel les deux surfaces du film de cellulose régénérée sont prérevêtues.

4. Emballage à atmosphère gazeuse contrôlée pour allonger la durée de conservation d'un produit frais, comprenant une structure multicouche contenant un film de cellulose régénérée compostable biodégradable, une couche supplémentaire formant barrière contre le gaz ou à la vapeur d'eau qui est appliquée sur le film de cellulose, et un revêtement par extrusion de co-polyester polymère compostable biodégradable sur la couche supplémentaire formant barrière, sur le côté intérieur de l'emballage par rapport au film de cellulose, étant précisé que l'emballage a des microperforations qui présentent chacune un diamètre de moins de 200 micromètres.

5. Emballage tel qu'il est revendiqué dans la revendication 4, dans lequel la surface intérieure du film de cellulose régénérée est prérevêtue avec un revêtement de co-polyester à base de solvant ou d'eau avant d'être revêtue avec la couche supplémentaire formant barrière.

6. Emballage tel qu'il est revendiqué dans la revendication 5, dans lequel les deux surfaces du film de cellulose régénérée sont prérevêtues.

7. Emballage tel qu'il est revendiqué dans l'une quelconque des revendications précédentes, dans lequel le revêtement de co-polyester extrudé présente une épaisseur moyenne supérieure à 8 et inférieure à 50 micromètres.

8. Emballage tel qu'il est revendiqué dans l'une quelconque des revendications précédentes, dans lequel le revêtement de co-polyester extrudé présente une épaisseur moyenne supérieure à 15 et inférieure à 40 micromètres.

9. Emballage tel qu'il est revendiqué dans l'une quelconque des revendications précédentes, dans lequel le co-polyester polymère extrudé comprend un co-polyester aliphatique-aromatique à base d'acide téréphtalique, d'acide adipique et de 1,4 butanediol, ou un polymère polybutylène succinate.

10. Emballage tel qu'il est revendiqué dans la revendication 9, dans lequel le co-polyester polymère extrudé comprend ledit co-polyester aliphatique-aromatique, et le co-polyester aliphatique-aromatique est mélangé à de l'amidon.

11. Emballage tel qu'il est revendiqué dans l'une quelconque des revendications 1 à 8, dans lequel le co-polyester polymère extrudé comprend un polymère polybutylène succinate, et ledit polymère polybutylène succinate est mélangé à un acide polylactique ou à de l'amidon.

12. Procédé pour fabriquer un emballage à atmosphère gazeuse contrôlée pour allonger la durée de conservation d'un produit frais, selon lequel un film de cellulose régénérée compostable biodégradable est prérevêtu avec un revêtement de co-polyester polymère compostable biodégradable à base de solvant ou d'eau, et un revêtement de co-polyester polymère est appliqué par extrusion sur la surface prérevêtue du film de cellulose régénérée, étant précisé que des microperforations sont formées dans l'emballage, avec chacune un diamètre moyen de moins de 200 micromètres.
